# EUROPEAN PATENT SPECIFICATION

(11) **EP 3 265 872 B1**
(45) Date of publication and mention of the grant of the patent: **01.07.2020**
(21) Application number: 15897861.9
(22) Date of filing: 08.07.2015
(51) Int. Cl.: G02F 1/167

(54) **ELECTROPHORETIC PRIVACY DEVICES**
ELEKTROPHORETISCHE DATENSCHUTZVORRICHTUNGEN
DISPOSITIFS DE CONFIDENTIALITÉ ÉLECTROPHORÉTIQUES

(43) Date of publication of application: 10.01.2018
(73) Proprietor: Hewlett-Packard Development Company, L.P., Spring TX 77389 (US)
(72) Inventor: WU, Kuan-Ting, Taipei 11568 (TW); CHU, Wei Kuang, Taipei 11568 (TW); VOSS, Kevin, Houston, Texas 77070 (US)
(74) Representative: Stöckeler, Ferdinand
(86) International application number: PCT/US2015/039521
(87) International publication number: WO 2017/007465

(56) References cited:
- JP-A- 2013 190 763
- KR-B1- 101 385 455
- US-A1- 2008 100 906
- US-A1- 2008 238 828
- US-A1- 2012 044 128
- US-A1- 2012 250 141
- US-A1- 2012 307 346
- US-A1- 2013 162 924

## Description

### BACKGROUND

Electrophoretic displays are non-emissive devices based on the electrophoresis of charged particles suspended in a fluid. Electrophoretic displays may comprise two electrodes placed opposite each other, with one of the electrodes being transparent. A suspension of a fluid and charged pigment particles may be enclosed between the electrodes. When a voltage difference is imposed between the electrodes, the pigment particles may accumulate toward one of the electrodes so that either the particles or the fluid may be seen through the transparent electrode according to the polarity of the voltage difference.

JP 2013-190763 discloses a viewing-angle controlled display comprising a display panel and an electrochromic device, the viewing angle being controllable by dispersing transparent charged particles in a dielectric solvent.

US 2012/0044128 A1 discloses examples of devices using photonic crystal characteristics. In one example, an electrode is interposed between a first and a second electrophoretic display unit and a first and a second electrode. Each electrophoretic display unit has particles which change according to the voltage at the electrodes.

### BRIEF DESCRIPTION OF THE DRAWINGS

The following detailed description references the drawings, wherein:
FIG. 1 is a schematic diagram of an example electrophoretic privacy device;
FIG. 2 is a schematic diagram of an example electrophoretic privacy device having a plurality of electrophoretic cells;
FIG. 3A is a schematic cross-sectional diagram of an example privacy controlled display; and
FIG. 3B is a schematic cross-sectional diagram of an example privacy controlled display with a touch sensor.

### DETAILED DESCRIPTION

With the rapid growth in the use of electronic devices for communication, the need for hardware that effectively and efficiently present information to users has also grown rapidly. Display devices typically output information in visual form. Electronic displays may convert electrical signal input to display visual information.

Electrophoretic displays, sometimes referred to as electronic paper, e-paper, and electronic ink, may be display technologies that mimic the appearance of ordinary ink on paper. Unlike backlit displays that emit light, electrophoretic displays may reflect light like paper. Electrophoretic displays operate by the motion of dispersed ink particles relative to a fluid under the influence of an electric field - the phenomenon called electrophoresis. Electrophoretic displays may provide an energy efficient and nonvolatile visual display solution, meaning that the display output may be maintained even if power is turned off.

In some applications, such as when sensitive information may be displayed on a screen, privacy measures may be desired to prevent unwanted access of the displayed information. This issue applies to many types of displays. Current solutions include privacy screens on computer monitor screens. However, current solutions may not be effective in various applications. For examples, privacy screens may not be adjustable or tunable so that the screen may be removable or the privacy features switched on and off.

Examples disclosed herein provide for electrophoretic privacy devices to provide privacy control on displays. Example electrophoretic privacy devices may include an electrophoretic cell coupled between a first electrode and a second electrode. The electrophoretic cell may contain a plurality of semi-transparent positively-charged particles and a plurality of semi-transparent negatively-charged particles dispersed in a dielectric fluid. When an electric field is applied across the electrophoretic cell, such as one induced by causing a voltage drop across the electrodes, the particles may accumulate towards opposite ends of the cell close to the electrodes. Adjusting the distribution of the particles may allow different levels or ranges of light transmittance depending on the transparency of the particles. In this manner, examples herein may provide for privacy control by providing control of how much light is passed through the electrophoretic privacy device.

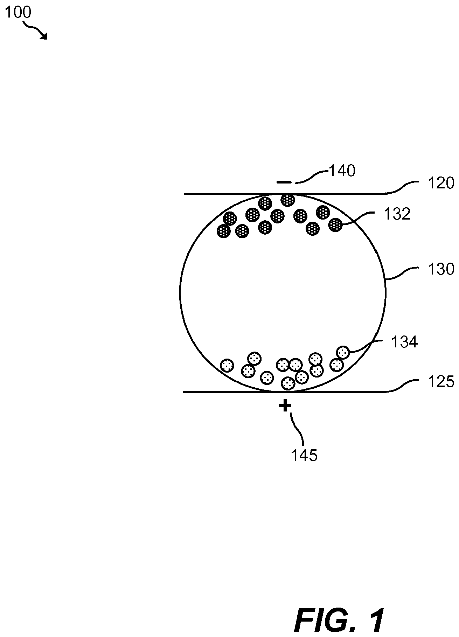

Referring now to the figures, FIG. 1 is a schematic diagram of an example electrophoretic privacy device 100. Electrophoretic privacy device 100 may include an electrophoretic cell 130 coupled between a first electrode 120 and a second electrode 125. Electrophoretic privacy device 100 may provide privacy and security control by allowing the control of how much light is passed through the device.

Electrophoretic cell 130 may include a plurality of semi-transparent positively-charged particles 132 and a plurality of semi-transparent negatively-charged particles 134 dispersed in a dielectric fluid. Electrophoretic cell 130 may include a shell which may be transparent. The shell may contain the dielectric fluid, which may house the plurality of particles. The electrophoretic cell 130 may be round as shown in FIG. 1, or it may be a variety of shapes.

The dielectric fluid may provide electrical insulation, and may prevent corona and arcing. The dielectric fluid may also serve as a coolant. Furthermore, in some examples, the dielectric fluid may be self-healing, which may mean that when an electric breakdown occurs, the discharge channel does not leave a permanent trace in the fluid. The dielectric fluid may include a number of materials, including oils, fluid polymers, and purified water.

The positively-charged particles 132 and the negatively-charged particles 134 may include a colored pigment. In some examples, at least one of the plurality of semi-transparent positively-charged particles 132 and the plurality of semi-transparent negatively-charged particles 134 may include particles with a transmittance of between 10 to 90%. Transmittance may be the effectiveness of a material to transmit radiant energy such as light. For example, transmittance may be the fraction of incident electromagnetic power that is transmitted. Less than full transmittance may depend on the materials used in the particles as well as the concentration of the pigments. The particles may exhibit either transparent or translucent properties or both.

In some examples, the plurality of semi-transparent positively-charged particles 132 may have particles that have a first transmittance, and the plurality of semi-transparent negatively-charged particles 134 may have particles that have a second transmittance. In some examples, all of the plurality of positively-charged particles 132 may have the first transmittance, and all of the plurality of negatively-charged particles 134 may have the second transmittance. In some particular examples, one of the first transmittance and the second transmittance is around 70%, and the other of the first transmittance and the second transmittance is around 30%.

Electrophoretic cell 130 may be coupled between first electrode 120 and second electrode 125. As shown in the example of FIG. 1, electrophoretic cell 130 may be coupled between the electrodes by being physically sandwiched between the two. First electrode 120 and second electrode 125 may be electrically conducting and may cause a voltage drop across electrophoretic cell 130, such as in response to one or both of the electrodes being electrically charged.

In some examples, at least one of the first electrode 120 and the second electrode 125 may be transparent. For example, in some examples, at least one of the first electrode 120 and the second electrode 125 may allow light to pass through the material without being significantly scattered. In some examples, at least one of the first electrode 120 and the second electrode 125 may be translucent. In some examples, both of the first electrode 120 and the second electrode 125 may be transparent. Alternatively, one of the electrodes may be transparent.

In some examples, at least one of the first electrode 120 and the second electrode 125 may be positively or negatively charged to control the distribution of the charged particles dispersed in the dielectric fluid within electrophoretic cell 130. As shown in FIG. 1, the first electrode 120 may be of a relatively negative charge 140, while the second electrode 125 may be of a relatively positive charge 145. As a result, positively-charged particles 132 may accumulate near first electrode 120, and negatively-charged particles 134 may accumulate near second electrode 125. In some examples, the particles may retain its distribution within electrophoretic cell 130 even when the electric field is removed, such as when power is turned off.

The charging of the electrodes may be controlled by a control engine. While not pictured in FIG. 1, a control engine may be operably coupled to at least one of the first electrode 120 and the second electrode 125. The control engine may generally represent a combination of hardware and programming. For example, the programming for the control engine may be processor-executable instructions stored on a non-transitory machine-readable storage medium and the hardware for control engine may include a processor. In addition or as an alternative, the control engine may include one or more hardware devices including electronic circuitry for implementing the functionality described.

If, for example, the particles with the higher transmittance is accumulated towards the electrode closest to a viewer, the electrophoretic privacy device 100 may appear lighter than if the particles with the lower transmittance is accumulated towards the electrode closest to the viewer. That is, the device may appear lighter if the more transparent particles are closer to the viewer, while the device may appear darker if the less transparent particles are closer to the viewers. Thus, the information presented by the electrophoretic privacy device 100, which may, for example, be used as e-paper, may be lighter or darker depending on the distribution of the semi-transparent particles in the electrophoretic cell 130.

In some examples, one of the first electrode 120 and the second electrode 125 may be charged. In such instances, one of the plurality of semi-transparent positively-charged particles 132 and the plurality of semi-transparent negatively-charged particles 134 may be accumulated towards the charged electrode, depending on the relative polarity of the charge compared to the particles. For example, if the first electrode 120 has negative charge 140 and second electrode 125 is not significant charged, positively-charged particles 132 may accumulate towards first electrode 120, while negatively-charged particles 134 may remain in its original distribution. In some examples, the plurality of semi-transparent positively-charged particles 132 and the plurality of semi-transparent negatively-charged particles 134 may be randomly distributed within electrophoretic cell 130 without influence of an electric field.

Electrophoretic privacy device 100 does not display visual information itself but serves as light filter for controlling the privacy of a separate display to which it is operably coupled. In such examples, the distribution of the particles may dictate the amount of light that may be transmitted through the electrophoretic privacy device 100. For example, electrophoretic privacy device 100 may be coupled on top of a display surface, on an array, underneath a black matrix, or on non-viewing areas of a display.

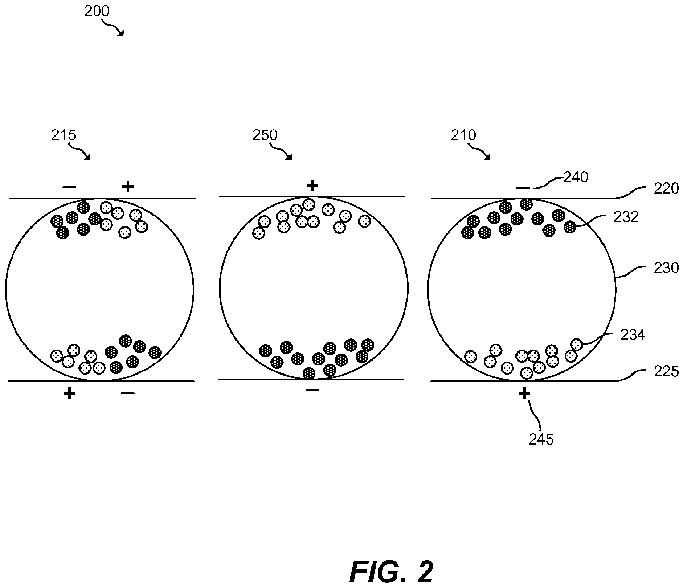

FIG. 2 is a schematic diagram of an example electrophoretic privacy device 200 having a plurality of electrophoretic cells 230 coupled between first electrodes 220 and second electrodes 225. Electrophoretic privacy device 200 may include a number of electrophoretic units, shown as 210, 215, and 250 that are analogous to electrophoretic privacy device 100.

Analogous to electrophoretic cell 130 of FIG. 1, each electrophoretic cell 230 may include a plurality of semi-transparent positively-charged particles 232 and a plurality of semi-transparent negatively-charged particles 234 dispersed in a dielectric fluid. Electrophoretic cell 230 may include a shell which may be transparent. The shell may contain the dielectric fluid, which may house the plurality of particles. The dielectric fluid may provide electrical insulation, and may include a number of materials, including oils, fluid polymers, and purified water.

In some examples, at least one of the plurality of semi-transparent positively-charged particles 232 and the plurality of semi-transparent negatively-charged particles 234 may include particles with a transmittance of between 10 to 90%. In some examples, the plurality of semi-transparent positively-charged particles 232 may have particles that have a first transmittance, and the plurality of semi-transparent negatively-charged particles 234 may have particles that have a second transmittance. In other words, the transmittance of the positively-charged particles 232 may be different than the transmittance of the negatively-charged particles 234, allowing different transmittance levels of the electrophoretic cell depending on particle distribution. In some examples, all of the plurality of positively-charged particles 232 may have the first transmittance, and all of the plurality of negatively-charged particles 234 may have the second transmittance. In some particular examples, one of the first transmittance and the second transmittance is around 70%, and the other of the first transmittance and the second transmittance is around 30%.

Electrophoretic cells 230 may be coupled between first electrodes 220 and second electrodes 225. In some examples, each electrophoretic cell 230 may not be coupled to its own first electrode 220 and second electrode 225. For example, electrophoretic units 210, 215, and 250 may be coupled to one first electrode 220 and to one second electrode 225. Alternatively, electrophoretic units 210, 215, and 250 may be coupled to one first electrode 220 while each unit is coupled to a different second electrode 225. Alternatively, electrophoretic units 210, 215, and 250 may be coupled to one second electrode 225 while each unit is coupled to a different first electrode 220.

In some examples, the first electrode 220 and the second electrode 225 are transparent. The first electrode 220 and the second electrode 225 allow light to pass through the material without being significantly scattered. Both of the first electrode 220 and the second electrode 225 are transparent.

In some examples, at least one of the first electrode 220 and the second electrode 225 may be positively or negatively charged to control the distribution of the charged particles dispersed in the dielectric fluid within electrophoretic cell 230. In electrophoretic unit 210, the first electrode 220 may be of a relatively negative charge 240, while the second electrode 225 may be of a relatively positive charge 245. As a result, positively-charged particles 232 may accumulate near first electrode 220, and negatively-charged particles 234 may accumulate near second electrode 225.

In contrast, in electrophoretic unit 250, the first electrode may be of a relatively positive charge, while the second electrode may be of a relatively negative charge. As a result, positively-charged particles of unit 250 may accumulate near its first electrode, and negatively-charged particles may accumulate near the second electrode.

In some examples, a portion of an electrode may have one charge, while another portion of the electrode may have another charge. FIG. 2 illustrates this in electrophoretic unit 215. As shown, a portion of a first electrode and of a respective portion of a second electrode of electrophoretic unit 215 may be charged to a certain voltage while another portion of the electrodes may be charged to another voltage. This may allow higher resolution for each electrophoretic unit.

Furthermore, if particles with the higher transmittance is accumulated towards the electrode closest to a viewer, that electrophoretic unit may appear lighter than if the particles with the lower transmittance is accumulated towards the electrode closest to the viewer. That is, that portion of electrophoretic privacy device may appear lighter if the more transparent particles are closer to the viewer, while the device may appear darker if the less transparent particles are closer to the viewers. Thus, the information presented by the electrophoretic privacy device 200, which may, for example, be used as e-paper, may be lighter or darker depending on the distribution of the semi-transparent particles in each electrophoretic unit.

When an electrophoretic privacy device 200 includes a plurality of electrophoretic units, such as arranged in a matrix, visual information may be displayed where each unit may serve as a pixel or group of pixels. In such a manner, electrophoretic privacy device 200 may operate as electronic paper.

Electrophoretic privacy device 200 does not display visual information itself but serves as light filter for controlling the privacy of a separate display to which it is operably coupled. In such examples, the distribution of the particles may dictate the amount of light that may be transmitted through the electrophoretic privacy device 200. For example, electrophoretic privacy device 200 may be coupled on top of a display surface, on an array, on top of a black matrix, or on non-viewing areas of a display.

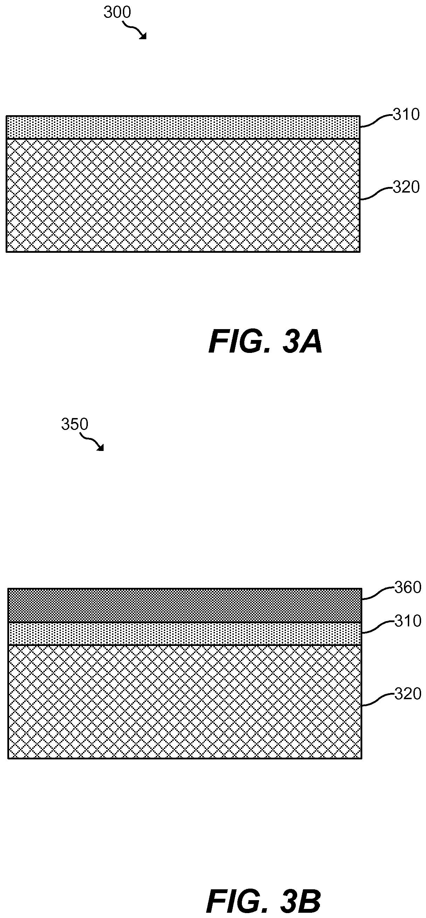

FIG. 3A is a schematic cross-sectional diagram of an example privacy controlled display 300. Privacy controlled display 300 may include an electrophoretic privacy device 310 coupled to a display panel 320.

Privacy controlled display 300 may be a variety of types of electronic visual display depending on the type of display that is display panel 320. Display panel 320 may include any type of electronic visual display. In some examples, display panel 320 may have an active display, such as LCD, organic light-emitting diode (OLED) and polymer light-emitting diode (PLED) displays. Active displays may emit light. In other examples, display panel 320 may have a passive display, such as electrophoretic, electrochromic, electrowetting, Cholesteric LCD and electromechanical displays. Passive displays may present visual information by modulating light.

Active displays may use emitted light to display visual information while passive displays may modulate light from another source to display visual information. Electrophoretic privacy device 310 may control the amount of visibility of the displayed visual information by altering the transmittance of light through the privacy device. As described in FIG. 1 and FIG. 2, electrophoretic privacy device 310 may control how much light passes through, thereby determining the visibility of display panel 320. Accordingly, electrophoretic privacy device 310 may control the brightness, clarity, and viewing angle of privacy controlled display 300, among other properties.

FIG. 3B is a schematic cross-sectional diagram of an example privacy controlled display 350 with a touch sensor 360. Privacy controlled display 350 may be similar to privacy controlled display 300 of FIG. 3A and may include display panel 320 coupled to electrophoretic privacy device 310.

Touch sensor 360 may be a tactile sensor such as a touch screen. The inclusion of touch sensor 360 allows privacy controls on touch devices such as mobile computers, mobile phones, and tablets. Touch sensor 360 may be coupled to electrophoretic privacy device 310.

In some other examples, touch sensor 360 may not be a separate component of privacy controlled display 350, but may be a part of another component. For example, touch sensor 360 may be built-in to display panel 320.

All of the features disclosed in this specification (including any accompanying claims, abstract and drawings), and/or all of the elements of any method or process so disclosed, may be combined in any combination, except combinations where at least some of such features and/or elements are mutually exclusive.

In the foregoing description, numerous details are set forth to provide an understanding of the subject disclosed herein. However, examples may be practiced without some or all of these details. Other examples may include modifications and variations from the details discussed above. It is intended that the appended claims cover such modifications and variations.

As used herein, the singular forms "a," "an," and "the" mean "one or more." The terms "including" and "having" are intended to have the same inclusive meaning as the term "comprising."

## Claims

1. A privacy controlled display (300, 350), comprising:
a display panel (320); and
a display privacy controller (100, 200) coupled to the display panel (320), the display privacy controller (100, 200) comprising an electrophoretic privacy device (310), comprising:
a first electrode (220) and a second electrode (225), wherein the first electrode (220) and the second electrode (225) are transparent; and
an electrophoretic cell (230) coupled between the first electrode (220) and the second electrode (225), wherein the electrophoretic cell (230) comprises a plurality of semi-transparent charged particles (232, 234) dispersed in a dielectric solvent,
**characterized in that** the plurality of semi-transparent charged particles (232, 234) comprises a plurality of semi-transparent negatively-charged particles (234) and a plurality of semi-transparent positively-charged particles (232).

2. The privacy controlled device of claim 1, the electrophoretic privacy device comprising a plurality of the first electrodes, a plurality of the second electrodes, and a plurality of the electrophoretic cells, wherein each of the electrophoretic cells is coupled between one of the plurality of first electrodes and one of the plurality of second electrodes.

3. The privacy controlled device of claim 1, wherein at least one of the plurality of semi-transparent negatively-charged particles and the plurality of semi-transparent positively-charged particles comprises particles with a transmittance of between 10 to 90%.

4. The privacy controlled device of claim 1, wherein one of the first transmittance and the second transmittance is around 70% and the other of the first transmittance and the second transmittance is around 30%.

5. The privacy controlled device of claim 1, wherein at least one of the first electrode (220) and the second electrode (225) is positively or negatively charged to control the distribution of the plurality of semi-transparent negatively-charged particles and of the plurality of semi-transparent positively-charged particles in the electrophoretic cell (230).

6. A privacy controlled display according to any of the preceding claims, further comprising:
a control engine operably coupled to at least one of the first electrode (220) and the second electrode (225), wherein the control engine is to charge the at least one of the first electrode (220) and the second electrode (225) to control distribution of the plurality of semi-transparent negatively-charged particles and the plurality of semi-transparent positively-charged particles in the electrophoretic cell (230).

7. The privacy controlled display of any of the preceding claims, further comprising touch sensors (360).

8. The privacy controlled display of any of the preceding claims, wherein the display panel (320) has an active display.

9. The privacy controlled display of claim 8, wherein the active display is an LCD display.

10. The privacy controlled display of claim 8, wherein the active display is an organic light-emitting diode, OLED, display.

11. The privacy controlled display of claim 8, wherein the active display is a polymer light-emitting diode, PLED.

12. The privacy controlled display of any of the claims 1-7, wherein the display panel (320) has a passive display.

13. The privacy controlled display of any of the preceding claims, wherein the passive display is chosen among an electrochromic display, an electrowetting display, a cholesteric LCD display, and an electromechanical display.

14. The privacy controlled display of any of the preceding claims, wherein the electrophoretic privacy device (310) is to control the amount of visibility of the displayed visual information by altering the transmittance of light through the display privacy controller.

## Patentansprüche

1. Datenschutzgesteuerte Anzeige (300, 350), die Folgendes umfasst:
ein Anzeigefeld (320); und
eine Anzeigedatenschutzsteuervorrichtung (100, 200), die mit dem Anzeigefeld (320) gekoppelt ist, wobei die Anzeigedatenschutzsteuervorrichtung (100, 200) eine elektrophoretische Datenschutzvorrichtung (310) umfasst, die Folgendes umfasst:
eine erste Elektrode (220) und eine zweite Elektrode (225), wobei die erste Elektrode (220) und die zweite Elektrode (225) transparent sind; und
eine elektrophoretische Zelle (230), die zwischen der ersten Elektrode (220) und der zweiten Elektrode (225) gekoppelt ist, wobei die elektrophoretische Zelle (230) mehrere halbtransparente, geladene Teilchen (232, 234) umfasst, die in einem dielektrischen Lösungsmittel dispergiert sind, **dadurch gekennzeichnet, dass** die mehreren halbtransparenten geladenen Teilchen (232, 234) mehrere halbtransparente, negativ geladene Teilchen (234) und mehrere halbtransparente, positiv geladene Teilchen (232) umfassen.

2. Datenschutzgesteuerte Vorrichtung nach Anspruch 1, wobei die elektrophoretische Datenschutzvorrichtung mehrere der ersten Elektroden, mehrere der zweiten Elektroden und mehrere der elektrophoretischen Zellen umfasst, wobei jede der elektrophoretischen Zellen zwischen einer der mehreren ersten Elektroden und einer der mehreren zweiten Elektroden gekoppelt ist.

3. Datenschutzgesteuerte Vorrichtung nach Anspruch 1, wobei wenigstens eines der mehreren halbtransparenten, negativ geladenen Teilchen und der mehreren halbtransparenten, positiv geladenen Teilchen Teilchen mit einem Durchlässigkeitsgrad von 10 bis 90 % umfasst.

4. Datenschutzgesteuerte Vorrichtung nach Anspruch 1, wobei einer des ersten Durchlässigkeitsgrads und des zweiten Durchlässigkeitsgrads etwa 70 % beträgt und der andere des ersten Durchlässigkeitsgrads und des zweiten Durchlässigkeitsgrads etwa 30 % beträgt.

5. Datenschutzgesteuerte Vorrichtung nach Anspruch 1, wobei wenigstens eine der ersten Elektrode (220) und der zweiten Elektrode (225) positiv oder negativ geladen ist, um die Verteilung der mehreren halbtransparenten, negativ geladenen Teilchen und der mehreren halbtransparenten, positiv geladenen Teilchen in der elektrophoretischen Zelle (230) zu steuern.

6. Datenschutzgesteuerte Anzeige nach einem der vorhergehenden Ansprüche, die ferner Folgendes umfasst:
eine Steuermaschine, die mit wenigstens einer der ersten Elektrode (220) und der zweiten Elektrode (225) wirksam gekoppelt ist, wobei die Steuermaschine die wenigstens eine der ersten Elektrode (220) und der zweiten Elektrode (225) laden soll, um die Verteilung der mehreren halbtransparenten, negativ geladenen Teilchen und der mehreren halbtransparenten, positiv geladenen Teilchen in der elektrophoretischen Zelle (230) zu steuern.

7. Datenschutzgesteuerte Anzeige nach einem der vorhergehenden Ansprüche, die ferner Berührungssensoren (360) umfasst.

8. Datenschutzgesteuerte Anzeige nach einem der vorhergehenden Ansprüche, wobei das Anzeigefeld (320) eine aktive Anzeige aufweist.

9. Datenschutzgesteuerte Anzeige nach Anspruch 8, wobei die aktive Anzeige eine LCD-Anzeige ist.

10. Datenschutzgesteuerte Anzeige nach Anspruch 8, wobei die aktive Anzeige eine organische Leuchtdiodenanzeige, OLED-Anzeige, ist.

11. Datenschutzgesteuerte Anzeige nach Anspruch 8, wobei die aktive Anzeige eine Polymerdiode, PLED, ist.

12. Datenschutzgesteuerte Anzeige nach einem der Ansprüche 1-7, wobei das Anzeigefeld (320) eine passive Anzeige aufweist.

13. Datenschutzgesteuerte Anzeige nach einem der vorhergehenden Ansprüche, wobei die passive Anzeige zwischen einer elektrochromen Anzeige, einer Elektrobenetzungsanzeige, einer cholesterischen LCD-Anzeige und einer elektromechanischen Anzeige gewählt wird.

14. Datenschutzgesteuerte Anzeige nach einem der vorhergehenden Ansprüche, wobei die elektrophoretische Datenschutzvorrichtung (310) das Maß an Sichtbarkeit der angezeigten visuellen Informationen durch Änderung des Lichtdurchlässigkeitgrads durch die Anzeigedatenschutzsteuervorrichtung steuern soll.

## Revendications

1. Afficheur à confidentialité commandée (300, 350), comprenant :
un panneau afficheur (320) ; et
un dispositif de commande de confidentialité d'afficheur (100, 200) couplé au panneau afficheur (320), le dispositif de commande de confidentialité d'afficheur (100, 200) comprenant un dispositif électrophorétique de confidentialité (310), comprenant :
une première électrode (220) et une seconde électrode (225), dans lequel la première électrode (220) et la seconde électrode (225) sont transparentes ; et
une cellule électrophorétique (230) couplée entre la première électrode (220) et la seconde électrode (225), dans lequel la cellule électrophorétique (230) comprend une pluralité de particules semi-transparentes chargées (232, 234) dispersées dans un solvant diélectrique, **caractérisé en ce que** la pluralité de particules semi-transparentes chargées (232, 234) comprend une pluralité de particules semi-transparentes chargées négativement (234) et une pluralité de particules semi-transparentes chargées positivement (232).

2. Dispositif à confidentialité commandée selon la revendication 1, le dispositif électrophorétique de confidentialité comprenant une pluralité des premières électrodes, une pluralité des secondes électrodes et une pluralité des cellules électrophorétiques, dans lequel chacune des cellules électrophorétiques est couplée entre l'une de la pluralité de premières électrodes et l'une de la pluralité de secondes électrodes.

3. Dispositif à confidentialité commandée selon la revendication 1, dans lequel la pluralité de particules semi-transparentes chargées négativement et/ou la pluralité de particules semi-transparentes chargées positivement comprend des particules ayant une transmittance comprise entre 10 et 90 %.

4. Dispositif à confidentialité commandée selon la revendication 1, dans lequel l'une parmi la première transmittance et la seconde transmittance est d'environ 70 % et l'autre parmi la première transmittance et la seconde transmittance est d'environ 30 %.

5. Dispositif à confidentialité commandée selon la revendication 1, dans lequel la première électrode (220) et/ou la seconde électrode (225) est chargée positivement ou négativement pour commander la distribution de la pluralité de particules semi-transparentes chargées négativement et de la pluralité de particules semi-transparentes chargées positivement dans la cellule électrophorétique (230).

6. Afficheur à confidentialité commandée selon l'une quelconque des revendications précédentes, comprenant en outre :
un moteur de commande couplé fonctionnellement à la première électrode (220) et/ou la seconde électrode (225), dans lequel le moteur de commande doit charger la première électrode (220) et/ou la seconde électrode (225) pour commander la distribution de la pluralité de particules semi-transparentes chargées négativement et de la pluralité de particules semi-transparentes chargées positivement dans la cellule électrophorétique (230).

7. Afficheur à confidentialité commandée selon l'une quelconque des revendications précédentes, comprenant en outre des capteurs tactiles (360).

8. Afficheur à confidentialité commandée selon l'une quelconque des revendications précédentes, dans lequel le panneau afficheur (320) a un afficheur actif.

9. Afficheur à confidentialité commandée selon la revendication 8, dans lequel l'afficheur actif est un afficheur LCD.

10. Afficheur à confidentialité commandée selon la revendication 8, dans lequel l'afficheur actif est un afficheur à diode électroluminescente organique, DELO.

11. Afficheur à confidentialité commandée selon la revendication 8, dans lequel l'afficheur actif est une diode électroluminescente à polymère, DELP.

12. Afficheur à confidentialité commandée selon l'une quelconque des revendications 1 à 7, dans lequel le panneau afficheur (320) a un afficheur passif.

13. Afficheur à confidentialité commandée selon l'une quelconque des revendications précédentes, dans lequel l'afficheur passif est choisi parmi un afficheur électrochrome, un afficheur à électromouillage, un afficheur LCD cholestérique et un afficheur électromécanique.

14. Afficheur à confidentialité commandée selon l'une quelconque des revendications précédentes, dans lequel le dispositif électrophorétique de confidentialité (310) doit commander la quantité de visibilité des informations visuelles affichées en modifiant la transmittance de la lumière à travers le dispositif de commande de confidentialité d'afficheur.
